# EUROPEAN PATENT SPECIFICATION

(11) **EP 2 608 419 B1**
(45) Date of publication and mention of the grant of the patent: **09.10.2024**
(21) Application number: 12198951.1
(22) Date of filing: 21.12.2012
(51) Int. Cl.: H04B 5/00, H02J 7/02

(54) **APPARATUS FOR DETECTING SIGNAL AND WIRELESS POWER TRANSMITTING APPARATUS HAVING THE SAME**
VORRICHTUNG ZUR SIGNALERKENNUNG UND DRAHTLOSE LEISTUNGSÜBERTRAGUNGSVORRICHTUNG DAMIT
APPAREIL DE DÉTECTION DE SIGNAL ET APPAREIL DE TRANSMISSION DE PUISSANCE SANS FIL AYANT CELUI-CI

(30) Priority: 21.12.2011 KR 20110138971
(43) Date of publication of application: 26.06.2013
(73) Proprietor: GE Hybrid Technologies, LLC, Niskayuna, New York 12309 (US)
(72) Inventor: Jung, Chun-Kil, SEOUL (KR); Shon, Soo-Dong, SUWON-SI, GYEONGGI-DO (KR)
(74) Representative: Dennemeyer & Associates S.A.

(56) References cited:
- WO-A2-2010/020895
- US-A1- 2007 126 584
- US-A1- 2008 157 603
- US-A1- 2010 181 961
- US-A1- 2010 277 003

## Description

### BACKGROUND

### Field

The present invention relates to a signal detecting apparatus for detecting transmission signals transmitted by a power receiving apparatus in a wireless power transmitting system and a wireless power transmitting apparatus having the signal detecting apparatus for detecting transmission signals.

### Description of the Related Art

Generally, various portable terminals such as a cellular phone, a smart phone, a personal digital assistant (PDA), and the like, has been mounted with a power receiving apparatus for supplying an operation power thereto.

The power receiving apparatus, which is charged with a power supplied from an external charging apparatus and supplies the charged power as an operation power to the portable terminal to operate the portable terminal, may include a battery cell module charged with the power, a charging and discharging circuit inputting the power supplied from the external charging apparatus to charge the power in the battery cell module and discharging the power charged in the battery cell module to supply the discharged power as the operation power to the portable terminal, and the like.

As a scheme of electrically connecting the charging apparatus to the power receiving apparatus, a terminal connection scheme of directly connecting a terminal through which the power is output in the charging apparatus to a terminal to which the power is input in the power receiving apparatus through a cable, a connector, and the like, has been known.

In the terminal connection scheme, the terminal of the charging apparatus and the terminal of the power receiving apparatus have different potential differences.

Therefore, in the case in which the terminal of the charging apparatus and the terminal of the power receiving apparatus are connected to each other or disconnected from each other, an instantaneous discharging phenomenon occurs.

This instantaneous discharging phenomenon causes abrasion of the terminal of the charging apparatus and the terminal of the power receiving apparatus. In addition, in the case in which foreign materials are accumulated in the terminal of the charging apparatus and the terminal of the power receiving apparatus, heat occurs in the foreign materials due to the instantaneous discharging phenomenon, such that there is a risk that an accident such as a fire, or the like, will occur.

Further, the power charged in the battery cell module in the power receiving apparatus is naturally discharged to the outside through the terminal of the power receiving apparatus due to moisture, or the like, such that a lifespan of the power receiving apparatus may be decreased and performance of the power receiving apparatus may be deteriorated.

Recently, a wireless power transmitting system wirelessly transmitting the power has been suggested in order to solve several problems of the terminal connection scheme as described above.

In the wireless power transmitting system, for example, a wireless power transmitting apparatus wirelessly transmits the power in an electromagnetic induction scheme. In addition, a power receiving apparatus receives the power wirelessly transmitted by the wireless power transmitting apparatus and charges the received power in the battery cell module.

A number of efforts have been conducted in the wireless power transmitting system in order for the wireless power transmitting apparatus to wirelessly transmit the power stably at high efficiency and in order for the power receiving apparatus to receive the power transmitted by the wireless power transmitting apparatus as much as possible to charge the power in the battery cell module.

In the wireless power transmitting system as described above, the power receiving apparatus generates a transmission signal including a unique ID signal and a power charging information signal indicating the power charged in the battery cell module and transmits the transmission signal to the wireless power transmitting apparatus through a power receiving coil, and the wireless power transmitting apparatus receives the transmission signal through a power transmitting coil.

Since a voltage and a current of the power transmitting coil of the wireless power transmitting apparatus are changed according to the transmission signal transmitted by the power receiving apparatus through the power receiving coil, the wireless power transmitting apparatus has detected the voltage and the current of the power transmitting coil using a voltage sensor, a current sensor, a current transducer, and the like, and has detected the detected voltage and current by a detecting circuit, or the like, to detect the transmission signal transmitted by the power receiving apparatus. Therefore, a configuration of a circuit for detecting the transmission signal transmitted by the power receiving apparatus is significantly complicated, such that a manufacturing cost of the wireless power transmitting apparatus increases and there is a limitation in precisely detecting the transmission signal. US 2010 0277003A2 discloses a wireless power transfer and receiver device related to adaptively tuning impedance in a receiver device to improve wireless power transfer. US 2008 0157603 A1 discloses an inductive power supply system to identify remote devices using unique identification frequencies. WO2010 020895A2 discloses a method of charging a mobile device on a charge pad by enabling communications between the charge pad and the mobile device.

US 2007/0126584 A1 discloses a dual threshold circuit of a Radio Frequency Identification (RFID) tag, which is directed to reducing effects of interference in signals received by an RFID tag. US 2010/0181961 A1 relates to wireless charging, and more specifically to devices, systems, and methods related to allocating power to receiver devices that may be located in wireless power systems.

### SUMMARY

An object of the present invention is to provide a signal detecting apparatus capable of simply detecting a transmission signal transmitted by a power receiving apparatus without using a voltage sensor, a current sensor, and a current transducer, and a wireless power transmitting apparatus having the same.

Another object of the present invention is to provide a signal detecting apparatus capable of simply detecting a transmission signal using a radio frequency identification (RFID) transponder, and a wireless power transmitting apparatus having the same.

Still another object of the present invention is to provide a signal detecting apparatus capable of precisely detecting a transmission signal transmitted by a power receiving apparatus using a magnetic field change signal of a power transmitting coil generated according to the transmission signal, and a wireless power transmitting apparatus having the same.

According to the present invention, there is provided a wireless power transmitting system comprising a power receiving apparatus that comprises battery cell module and a wireless power transmitting apparatus,wherein the power receiving apparatus comprises a power receiving controlling unit and is configured to receive power wirelessly transmitted by the wireless power transmitting apparatus, generate a transmission signal including a unique ID signal and a power charging information signal of the battery cell module, and transmit the transmission signal to the wireless power transmitting apparatus under the control of the power receiving controlling unit, and the wireless power transmitting apparatus comprises: a power transmitting coil configured to wirelessly transmit a power to a power receiving apparatus and a signal detecting apparatus configured to detect the transmission signal, transmitted by the power receiving apparatus by using a magnetic field change signal of the power transmitting coil, the magnetic field change signal being generated by the transmission signal and a power transmitting controlling unit configured to control that the power is wirelessly transmitted to the power receiving apparatus and to judge a charged state of the power receiving apparatus using the transmission signal detected by the signal detecting apparatus and a driving driver configured to generate a driving signal under the control of the power transmitting controlling unit; and a series resonant converter configured to switch a direct current (DC) power according to the driving signal and output the switched power to the power transmitting coil, wherein the signal detecting apparatus comprises: a magnetic field change signal detecting unit configured to detect the magnetic field change signal of the power transmitting coil generated according to the transmission signal, and a signal extracting unit configured to extract the transmission signal transmitted by the power receiving apparatus from the magnetic field change signal detected by the magnetic field change signal detecting unit. The magnetic field change signal detecting unit is a resonance tank circuit resonated by the magnetic field change signal of the power transmitting coil to generate a resonance signal. The resonance tank circuit comprises: an RFID transponder configured to detect the magnetic field change signal of the power transmitting coil and a capacitor connected in parallel with the RFID transponder to allow resonance to be generated by the magnetic field change signal of the power transmitting coil. The signal extracting unit includes: an envelope detecting unit configured to detect an envelope of the magnetic field change signal, and a low pass filter configured to low-pass-filter the envelope detected by the envelope detecting unit, and a comparator configured to compare an output signal of the low pass filter with a preset reference voltage to extract the transmission signal.

The number of power transmitting coils may be one or two or more.

The wireless power transmitting apparatus may further include an alternate current (AC) to DC converter configured to convert an AC power into a DC power and supply the DC power as an operation power to the wireless power transmitting apparatus.

The AC to DC converter may be provided integrally with the wireless power transmitting apparatus in the wireless power transmitting apparatus.

The signal extracting unit may further include an amplifier disposed between the low pass filter and the comparator and configured to amplify the output signal of the low pass filter and output the amplified signal to the comparator.

### BRIEF DESCRIPTION OF THE DRAWINGS

Hereinafter, the present invention will be described in detailed through exemplary embodiments thereof with reference to the accompanying drawings, in some of which the same reference numeral will be used to describe the same component.
FIG. 1 is a block diagram showing a configuration of a wireless power transmitting system according to an exemplary embodiment of the present invention;
FIG. 2 is a block diagram showing a configuration of a signal detecting apparatus according to the exemplary embodiment of the present invention; and
FIG. 3 is a block diagram showing a configuration of a wireless power transmitting system according to another exemplary embodiment of the present invention.

### DETAILED DESCRIPTION

The following detailed description is only an example and only illustrates exemplary embodiments of the present invention. In addition, a principle and a concept of the present invention are provided in order to most usefully and easily describe the present invention.

Therefore, for basic understanding of the present invention, a more detailed structure than necessary will not be provided, and several forms of the present invention that may be executed by those skilled in the art will be illustrated in the accompanying drawings.

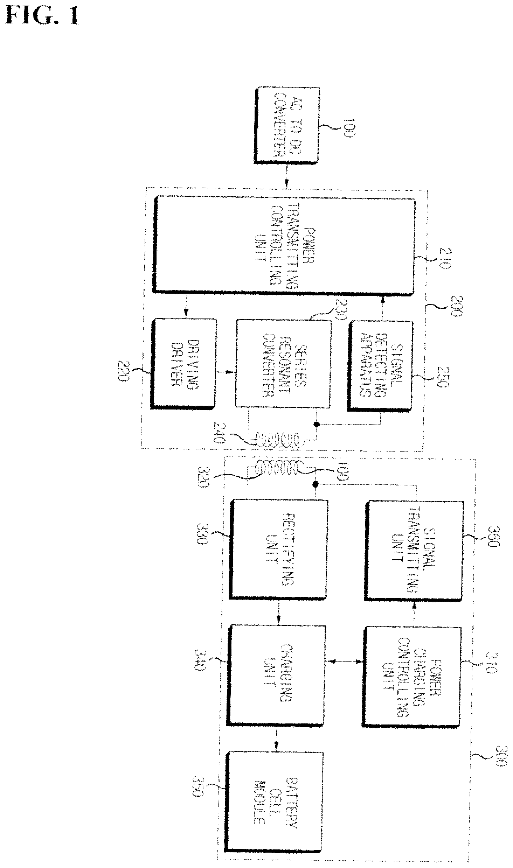

FIG. 1 is a block diagram showing a configuration of a wireless power transmitting system according to an exemplary embodiment of the present invention. In FIG. 1, reference number 100 indicates an alternate current (AC) to direct current (DC) converter. The AC to DC converter 100 converts an AC power input from the outside into a DC power.

Reference numeral 200 indicates a wireless power transmitting apparatus. The wireless power transmitting apparatus 200 switches the DC power converted by the AC to DC converter 100 and wirelessly transmits the switched power in, for example, an electromagnetic induction scheme.

Although the case in which the AC to DC converter 100 is provided separately from the wireless power transmitting apparatus 200 has been described herein by way of example, the AC to DC converter 100 may also be integrated in the wireless power transmitting apparatus 200 in implementing the present invention.

Reference numeral 300 indicates a power receiving apparatus. The power receiving apparatus 300 receives and charges the power wirelessly transmitted by the wireless power transmitting apparatus 200, generates a transmission signal including a unique ID signal and a power charging information signal, and transmits the transmission signal to the wireless power transmitting apparatus 200.

The wireless power transmitting apparatus 200 includes a power transmitting controlling unit 210, a driving driver 220, a series resonant converter 230, a power transmitting coil 240, and a signal detecting apparatus 250 according to the exemplary embodiment of the present invention.

The power transmitting controlling unit 210 controls that the power is wirelessly transmitted to the power receiving apparatus 300.

The driving driver 220 generates a driving signal for wirelessly transmitting the power, and the like, under a control of the power transmitting controlling unit 210.

The series resonant converter 230 switches a DC power supplied from the AC to DC converter 100 according to the driving signal generated by the driving driver 220 to generate an AC power.

The power transmitting coil 240 wirelessly transmits the power while being resonated by the AC power generated by the series resonant converter 230.

The signal detecting apparatus 250 detects the transmission signal transmitted by the power receiving apparatus 300 from a magnetic field change of the power transmitting coil 240 and provides the detected transmission signal to the power transmitting controlling unit 210.

The power receiving apparatus 300 includes a power charging controlling unit 310, a power receiving coil 320, a rectifying unit 330, a charging unit 340, a battery cell module 350, a signal transmitting unit 360, and the like.

The power charging controlling unit 310 controls that the power wirelessly transmitted by the wireless power transmitting apparatus 200 is received and charged and controls that the transmission signal including the unique ID signal and the power charging information signal is generated and transmitted to the wireless power transmitting apparatus 200.

The power receiving coil 320 is coupled to the power transmitting coil 240 of the power transmitting apparatus 200 in an electromagnetic induction scheme to receive the power wirelessly transmitted by the power transmitting coil 240.

The rectifying unit 330 rectifies the power received by the power receiving coil 320 to convert the power into a DC power.

The charging unit 340 charges the DC power rectified by the rectifying unit 530 in the battery cell module 350 under the control of the power charging controlling unit 310 and provides the power charging information to the power charging controlling unit 310.

The signal transmitting unit 360 generates the transmission signal including the unique ID signal and the power charging information under the control of the power receiving controlling unit 310 and transmits the generated transmission signal to the wireless power transmitting apparatus 200 through the power receiving coil 320.

In the wireless power transmitting system having the above-mentioned configuration, the AC to DC converter 100 converts the AC power input from the outside into the DC power and supplies the converted DC power as an operation power to the wireless power transmitting apparatus 200, such that the wireless power transmitting apparatus 200 is normally operated.

In this state, in the case in which the wireless power transmitting apparatus 200 transmits the power to the power receiving apparatus 300, the power transmitting controlling unit 210 controls the driving driver 220 to generate the driving signal for transmitting the power, and the series resonant converter 230 switches the DC power output by the AC to DC converter 100 according to the driving signal for transmitting the generated power to convert the DC power into the AC power and applies the converted AC power to the power transmitting coil 240 to generate resonance.

For example, the power transmitting coil 240 is designed to resonate at a frequency of 100 kHz, the series resonant converter 230 switches the DC power according to the driving signal for transmitting the power to generate the AC power having the frequency of 100 kHz, and the AC power having the frequency of 100 kHz is applied to the power transmitting coil 240 to generate the resonance.

When the resonance is generated in the power transmitting coil 240, the power is wirelessly transmitted while a large amount of current flows to the power transmitting coil 240.

The power receiving coil 320 of the power receiving apparatus 300 receives the power transmitted by the power transmitting coil 240, the rectifying unit 330 converts the received power into the DC power, and the charging unit 340 charges the converted DC power in the battery cell module 350 under the control of the power charging controlling unit 310.

In addition, the power charging controlling unit 310 judges an amount of power charged in the battery cell module 350 through the charging unit 340 and controls the signal transmitting unit 360 according to the judged amount of power to generate the transmission signal including the unique ID signal and the power charging information signal, and the transmission signal generated by the signal transmitting unit 360 is output to the power receiving coil 320.

In this case, in the power receiving coil 320, a magnetic field change according to the transmission signal generated by the signal transmitting unit 360 is generated, and a magnetic field of the power transmitting coil 240 is changed according to the generated magnetic field change.

The signal detecting circuit 250 detects the magnetic field change of the power transmitting coil 240, detects the transmission signal generated by the signal transmitting unit 360 from the detected magnetic field change, and outputs the detected transmission signal to the power transmitting controlling unit 210.

The power transmitting controlling unit 210 judges whether or not the power charging of the power receiving apparatus 300 has been completed using the transmission signal detected by the signal detecting circuit 250.

In the case in which it is judged that the power charging of the power receiving apparatus 300 has not been completed, the power transmitting controlling unit 210 continuously performs the operation as described above to continuously the power wirelessly to the power receiving apparatus 300.

On the other hand, in the case in which it is judged that the power charging of the power receiving apparatus 300 has been completed, the power receiving apparatus 300 controls the driving driver 220 not to generate the driving signal, thereby stopping the operation of wirelessly transmitting the power.

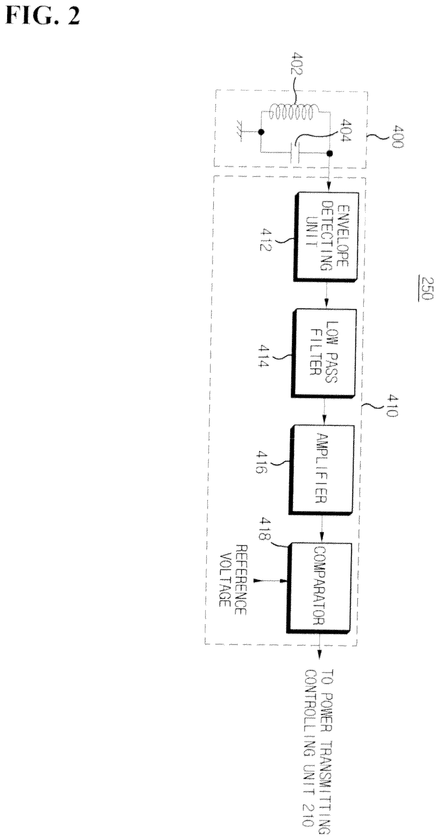

FIG. 2 is a block diagram showing a configuration of a signal detecting apparatus 220 according to the exemplary embodiment of the present invention. In FIG. 2, reference numeral 400 indicates a resonance tank circuit. The resonance tank circuit 400 may include a radio frequency identification (RFID) transponder 402 and a capacitor 404. The RFID transponder 402, which is installed to be close to the power transmitting coil 240, detects the magnetic field change signal according to the magnetic field change generated in the power transmitting coil 240. In addition, the capacitor 404 is connected in parallel with the RFID transponder 402 and is resonated by the magnetic field change signal detected by the RFID transponder 402 to generate a resonance signal.

Reference numeral 410 indicates a signal extracting unit extracting the transmission signal transmitted by the power receiving apparatus 300 from the resonance signal of the resonance tank circuit 400 and outputs the extracted transmission signal to the power transmitting controlling unit 210. The signal extracting unit 410 includes an envelope detecting unit 412, a low pass filter 414, an amplifier 416, and a comparator 418.

The envelope detecting unit 412 detects an envelope signal from the resonance signal of the resonance tank circuit 400.

The low pass filter 414 filters and detects a low frequency signal from the envelope signal detected by the envelope detecting unit 412.

The amplifier 416 amplifies the signal low-pass-filtered by the low pass filter 414.

The comparator 418 compares the signal amplified by the amplifier 416 with a preset reference voltage to extract the signal transmitted by the power receiving apparatus 300 and outputs the extracted signal to the power transmitting controlling unit 210.

In the signal detecting apparatus 250 according to the exemplary embodiment of the present invention having the above-mentioned configuration, the RFID transponder 402 of the resonance tank circuit 400 detects the magnetic field change of the power transmitting coil 240 generated according to the transmission signal transmitted by the power receiving apparatus 300.

The capacitor 404 is connected in parallel with the RFID transponder 402, and the RFID transponder 402 and the capacitor 404 are resonated in parallel with each other according to the magnetic field change signal detected by the RIFD transponder 402 to generate the resonance signal.

That is, the transmission signal transmitted by the power receiving apparatus 300 is transmitted at a predetermined frequency, the magnetic field change is generated in the power transmitting coil 240 according to the predetermined frequency of the transmission signal, and the RFID transponder 402 and the capacitor 404 are resonated in parallel with each other at the frequency according to the magnetic field change to generate the resonance signal.

The envelope detecting unit 412 of the signal extracting unit 410 detects the envelope signal from the resonance signal. Then the detected envelope signal is low-pass-filtered by the low pass filter 414, amplified by the amplifier 416, and then input to the comparator 418.

Then, the comparator 418 compares the output signal of the amplifier 416 with a preset reference voltage to extract the transmission signal transmitted by the power receiving apparatus 300 and outputs the extracted transmission signal to the power transmitting controlling unit 210. Next, the power transmitting controlling unit 210 judges whether or not the power charging of the power receiving apparatus 300 has been completed using the transmission signal extracted by the comparator 418.

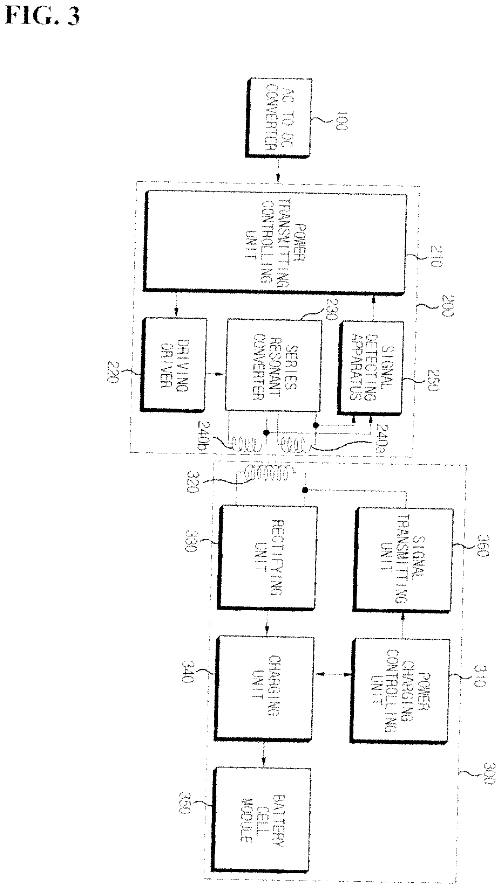

FIG. 3 is a block diagram showing a configuration of a wireless power transmitting system according to another exemplary embodiment of the present invention. Referring to FIG. 3, the wireless power transmitting apparatus 200 according to another exemplary embodiment of the present invention may include two power transmitting coils 240a and 240b.

In another exemplary embodiment of the present invention, the series resonant converter 230 generates two AC powers and outputs the two AC powers to the two power transmitting coils 240a and 240b, respectively, and the two power receiving coils 240a and 240b wirelessly transmits the powers while being resonated.

Since an operation of the wireless power transmitting apparatus 200 including the two power transmitting coils 240a and 240b is the same as that of the wireless power transmitting apparatus according to the exemplary embodiment of the present invention described above, a detailed description thereof will be omitted.

Meanwhile, although the case in which the wireless power transmitting apparatus 200 according to the present invention includes one power transmitting coil 240 or two power transmitting coils 240a and 240b has been described above by way of example, the present invention is not limited thereto. That is, the wireless power transmitting apparatus 300 may also include three or more power transmitting coils, that is, a plurality of power transmitting coils.

With the signal detecting apparatus and the wireless power transmitting apparatus having the same according to the exemplary embodiments of the present invention, the resonance tank circuit is configured of the RFID transponder detecting the magnetic field change of the power transmitting coil and the capacitor to generate the resonance signal, and the transmission signal transmitted by the power receiving apparatus is extracted from the generated resonance signal.

Therefore, a configuration of the circuit extracting the signal transmitted by the power receiving apparatus is significantly simple, thereby making it possible to decrease a manufacturing cost of the wireless power transmitting apparatus and precisely detect the transmission signal

## Claims

1. A wireless power transmitting system comprising a power receiving apparatus (300) that comprises a battery cell module (350) and a wireless power transmitting apparatus (200), wherein the power receiving apparatus (300) comprises a power receiving controlling unit (310) and is configured to receive power wirelessly transmitted by the wireless power transmitting apparatus (200), generate a transmission signal including a unique ID signal and a power charging information signal of the battery cell module (350), and transmit the transmission signal to the wireless power transmitting apparatus (200) under the control of the power receiving controlling unit (310), and the wireless power transmitting apparatus (200) comprises:
a power transmitting coil (240) configured to wirelessly transmit power to the power receiving apparatus (300);
a signal detecting apparatus (250) configured to detect the transmission signal, transmitted by the power receiving apparatus (300) by using a magnetic field change signal of the power transmitting coil (240), the magnetic field change signal being generated by the transmission signal;
a power transmitting controlling unit (210) configured to control that the power is wirelessly transmitted to the power receiving apparatus (300) and to judge a charged state of the power receiving apparatus (300) using the transmission signal detected by the signal detecting apparatus (250);
a driving driver (220) configured to generate a driving signal under the control of the power transmitting controlling unit (210); and
a series resonant converter (230) configured to switch a direct current (DC) power according to the driving signal and output the switched power to the power transmitting coil (240),
wherein:
the signal detecting apparatus comprises:
a magnetic field change signal detecting unit (400) configured to detect the magnetic field change signal of the power transmitting coil (240) generated according to the transmission signal; and
a signal extracting unit (410) configured to extract the transmission signal transmitted by the power receiving apparatus (300) from the magnetic field change signal detected by the magnetic field change signal detecting unit (400);
the magnetic field change signal detecting unit (400) is a resonance tank circuit resonated by the magnetic field change signal of the power transmitting coil (240) to generate a resonance signal; **characterized in that**
the resonance tank circuit comprises:
an RFID transponder configured to detect the magnetic field change signal of the power transmitting coil; and
a capacitor connected in parallel with the RFID transponder to allow resonance to be generated by the magnetic field change signal of the power transmitting coil (240);
the signal extracting unit includes:
an envelope detecting unit (412) configured to detect an envelope of the magnetic field change signal;
a low pass filter (414) configured to low-pass-filter the envelope detected by the envelope detecting unit (412); and
a comparator (418) configured to compare an output signal of the low pass filter (414) with a preset reference voltage to extract the transmission signal.

2. The wireless power transmitting system of claim 1, wherein the number of power transmitting coils (240) is one or two or more.

3. The wireless power transmitting system of claim 1, further comprising an AC/DC converter (100) configured to convert an AC power into a DC power and supply the DC power as an operation power to the wireless power transmitting apparatus (200).

4. The wireless power transmitting system of claim 3, wherein the AC/DC converter is provided integrally with the wireless power transmitting apparatus (200) in the wireless power transmitting apparatus (200).

5. The wireless power transmitting system of claim 1, wherein the signal extracting unit further includes an amplifier disposed between the low pass filter (414) and the comparator (418) and configured to amplify the output signal of the low pass filter (414) and output the amplified signal to the comparator (418).

## Patentansprüche

1. Drahtloses Leistungsübertragungssystem, umfassend eine Leistungsempfangseinrichtung (300), die ein Batteriezellenmodul (350) und eine drahtlose Leistungsübertragungseinrichtung (200) umfasst, wobei die Leistungsempfangseinrichtung (300) eine Leistungsempfangssteuereinheit (310) umfasst und dazu konfiguriert ist, Leistung, die von der drahtlosen Leistungsübertragungseinrichtung (200) drahtlos übertragen wird, zu empfangen, ein Übertragungssignal, das ein eindeutiges ID-Signal und ein Leistungsladeinformationssignal des Batteriezellenmoduls (350) beinhaltet, zu erzeugen und das Übertragungssignal an die drahtlose Leistungsübertragungseinrichtung (200) unter der Steuerung der Leistungsempfangssteuereinheit (310) zu senden; und wobei die drahtlose Leistungsübertragungseinrichtung (200) Folgendes umfasst:
eine Leistungsübertragungsspule (240), die dazu konfiguriert ist, Leistung drahtlos an die Leistungsempfangseinrichtung (300) zu übertragen;
eine Signalerkennungseinrichtung (250), die dazu konfiguriert ist, das Übertragungssignal, das von der Leistungsempfangseinrichtung (300) übertragen wird, unter Verwendung eines Magnetfeldänderungssignals der Leistungsübertragungsspule (240) zu erkennen, wobei das Magnetfeldänderungssignal von dem Übertragungssignal erzeugt wird;
eine Leistungsübertragungssteuereinheit (210), die dazu konfiguriert ist, zu steuern, dass die Leistung drahtlos an die Leistungsempfangseinrichtung (300) übertragen wird, und einen Ladezustand der Leistungsempfangseinrichtung (300) unter Verwendung des Übertragungssignals, das von der Signalerkennungseinrichtung (250) erkannt wird, zu beurteilen;
einen treibenden Treiber (220), der dazu konfiguriert ist, ein Treibsignal unter der Steuerung der Leistungsübertragungssteuereinheit (210) zu erzeugen; und
einen Reihenresonanzwandler (230), der dazu konfiguriert ist, eine Gleichstrom (DC) - Leistung gemäß dem Treibsignal zu schalten und die geschaltete Leistung an die Leistungsübertragungsspule (240) auszugeben, wobei:
die Signalerkennungseinrichtung Folgendes umfasst:
eine Magnetfeldänderungssignal-Erkennungseinheit (400), die dazu konfiguriert ist, das Magnetfeldänderungssignal der Leistungsübertragungsspule (240), das gemäß dem Übertragungssignal erzeugt wird, zu erkennen; und
eine Signalextraktionseinheit (410), die dazu konfiguriert ist, das von der Leistungsempfangseinrichtung (300) übertragene Übertragungssignal aus dem Magnetfeldänderungssignal, das von der Magnetfeldänderungssignal-Erkennungseinheit (400) erkannt wird, zu extrahieren; die Magnetfeldänderungssignal-Erkennungseinheit (400) eine Resonanztankschaltung ist, die durch das Magnetfeldänderungssignal der Leistungsübertragungsspule (240) resoniert wird, um ein Resonanzsignal zu erzeugen; **gekennzeichnet dadurch, dass**
die Resonanztankschaltung Folgendes umfasst:
einen RFID-Transponder, der dazu konfiguriert ist, das Magnetfeldänderungssignal der Leistungsübertragungsspule zu erkennen; und
einen Kondensator, der parallel zu dem RFID-Transponder angeschlossen ist, um zu ermöglichen, dass eine Resonanz durch das Magnetfeldänderungssignal der Leistungsübertragungsspule (240) erzeugt wird;
die Signalextraktionseinheit Folgendes beinhaltet:
eine Hüllkurvenerkennungseinheit (412), die dazu konfiguriert ist, eine Hüllkurve des Magnetfeldänderungssignals zu erkennen;
einen Tiefpassfilter (414), der dazu konfiguriert ist, eine Tiefpassfilterung an der von der Hüllkurvenerkennungseinheit (412) erkannten Hüllkurve vorzunehmen; und
einen Komparator (418), der dazu konfiguriert ist, ein Ausgabesignal des Tiefpassfilters (414) mit einer voreingestellten Referenzspannung zu vergleichen, um das Übertragungssignal zu extrahieren.

2. Drahtloses Leistungsübertragungssystem nach Anspruch 1, wobei die Anzahl der Leistungsübertragungsspulen (240) eine oder zwei oder mehr ist.

3. Drahtloses Leistungsübertragungssystem nach Anspruch 1, ferner umfassend einen AC/DC-Wandler (100), der dazu konfiguriert ist, eine AC-Leistung in eine DC-Leistung zu wandeln und die DC-Leistung als eine Betriebsleistung der drahtlosen Leistungsübertragungseinrichtung (200) zuzuführen.

4. Drahtloses Leistungsübertragungssystem nach Anspruch 3, wobei der AC/DC-Wandler einstückig mit der drahtlosen Leistungsübertragungseinrichtung (200) in der drahtlosen Leistungsübertragungseinrichtung (200) vorgesehen ist.

5. Drahtloses Leistungsübertragungssystem nach Anspruch 1, wobei die Signalextraktionseinheit ferner einen Verstärker beinhaltet, der zwischen dem Tiefpassfilter (414) und dem Komparator (418) angeordnet ist und dazu konfiguriert ist, das Ausgabesignal des Tiefpassfilters (414) zu verstärken und das verstärkte Signal an den Komparator (418) auszugeben.

## Revendications

1. Système de transmission de puissance sans fil comprenant un appareil de réception de puissance (300) qui comprend un module de cellules de batterie (350) et un appareil de transmission de puissance sans fil (200), dans lequel l'appareil de réception de puissance (300) comprend une unité de contrôle de réception de puissance (310) et est configuré pour recevoir de la puissance transmise sans fil par l'appareil de transmission de puissance sans fil (200), pour générer un signal de transmission comprenant un signal d'identification unique et un signal d'information de charge de puissance du module de cellules de batterie (350), et pour transmettre le signal de transmission à l'appareil de transmission de puissance sans fil (200) sous le contrôle de l'unité de contrôle de réception de puissance (310), et l'appareil de transmission de puissance sans fil (200) comprend :
une bobine de transmission de puissance (240) configurée pour transmettre sans fil de la puissance à l'appareil de réception de puissance (300) ;
un appareil de détection de signal (250) configuré pour détecter le signal de transmission transmis par l'appareil de réception de puissance (300) en utilisant un signal de changement de champ magnétique de la bobine de transmission de puissance (240), le signal de changement de champ magnétique étant généré par le signal de transmission ; une unité de contrôle de transmission de puissance (210) configurée pour contrôler que la puissance est transmise sans fil à l'appareil de réception de puissance (300) et pour évaluer un état de charge de l'appareil de réception de puissance (300) à l'aide du signal de transmission détecté par l'appareil de détection de signal (250) ;
un pilote de commande (220) configuré pour générer un signal de commande sous le contrôle de l'unité de contrôle de transmission de puissance (210) ; et
un convertisseur résonant en série (230) configuré pour commuter une alimentation de courant continu (CC) en fonction du signal de commande et pour envoyer l'alimentation commutée à la bobine de transmission de puissance (240),
dans lequel :
l'appareil de détection de signal comprend :
une unité de détection de signal de changement de champ magnétique (400) configurée pour détecter le
signal de changement de champ magnétique de la bobine de transmission de puissance (240) généré conformément au signal de transmission ; et
une unité d'extraction de signal (410) configurée pour extraire le signal de transmission transmis par l'appareil de réception de puissance (300) à partir du signal de changement de champ magnétique détecté par l'unité de détection de signal de changement de champ magnétique (400) ;
l'unité de détection de signal de changement de champ magnétique (400) est un circuit réservoir de résonance qui résonne avec le signal de changement de champ magnétique de la bobine de transmission de puissance (240) pour générer un signal de résonance ;
**caractérisé en ce que**
le circuit réservoir de résonance comprend :
un transpondeur de radio-identification configuré pour détecter le signal de changement de champ magnétique de la bobine de transmission de puissance ; et
un condensateur connecté en parallèle avec le transpondeur de radio-identification pour permettre la génération d'une résonance par le signal de changement de champ magnétique de la bobine de transmission de puissance (240) ;
l'unité d'extraction de signal comprend :
une unité de détection d'enveloppe (412) configurée pour détecter une enveloppe du signal de changement de champ magnétique ;
un filtre passe-bas (414) configuré pour filtrer par passe-bas l'enveloppe détectée par l'unité de détection d'enveloppe (412) ; et
un comparateur (418) configuré pour comparer un signal de sortie du filtre passe-bas (414) à une tension de référence prédéfinie pour extraire le signal de transmission.

2. Système de transmission de puissance sans fil selon la revendication 1, dans lequel le nombre de bobines de transmission de puissance (240) est de une, deux ou plusieurs bobines.

3. Système de transmission de puissance sans fil selon la revendication 1, comprenant en outre un convertisseur CA/CC
(100) configuré pour convertir une alimentation CA en une alimentation CC et pour fournir l'alimentation CC en tant qu'alimentation de service à l'appareil de transmission de puissance sans fil (200).

4. Système de transmission de puissance sans fil selon la revendication 3, dans lequel le convertisseur CA/CC est
intégré à l'appareil de transmission de puissance sans fil (200) dans l'appareil de transmission de puissance sans fil (200).

5. Système de transmission de puissance sans fil selon la revendication 1, dans lequel l'unité d'extraction de signal comprend en outre un amplificateur disposé entre le filtre passe-bas (414) et le comparateur (418), et configuré pour amplifier le signal de sortie du filtre passe-bas (414) et pour envoyer le signal amplifié au comparateur (418).
